# EUROPEAN PATENT APPLICATION

(11) **EP 4 691 247 A1**
(43) Date of publication of application: **11.02.2026**
(21) Application number: 24779183.3
(22) Date of filing: 06.03.2024
(51) Int. Cl.: A23D 9/00, A23G 1/32

(54) **OILY FOOD FOR COATING**

(30) Priority: 30.03.2023 JP 2023054499
(71) Applicant: Fuji Oil Company, Limited, Izumisano-shi Osaka 598-8540 (JP)
(72) Inventor: ARAKI, Misako, Izumisano-shi, Osaka 598-8540 (JP); IRISAWA, Yusuke, Izumisano-shi, Osaka 598-8540 (JP); KATAFUCHI, Maki, Izumisano-shi, Osaka 598-8540 (JP)
(74) Representative: Becker, Eberhard
(86) International application number: PCT/JP2024/008405
(87) International publication number: WO 2024/203047

(57) **Abstract**

The present invention addresses the problem of enabling an oily food for coating to be applied in a controlled amount, by making the oily food to retain flowability even when the oily food is contaminated with water. The present invention further addresses the problem of obtaining an appearance with a satisfactory gloss after application. Provided is an oily food for coating, the oily food satisfying all of the following requirements (1) to (3). (1) The oil content is 35-70 mass%, (2) the oily food for coating contains a sucrose fatty acid ester in which a major constituent fatty acid is a C16-24 saturated fatty acid and which has an HLB of 3-17, and (3) when the oily food for coating is melted at 50°C, the yield value is 0.1-10 Pa, wherein the major constituent fatty acid of the sucrose fatty acid ester is a fatty acid accounting for at least 60 mass% of the constituent fatty acids.

## Description

### Technical Field

### Related Application

The present application claims the benefit of priority from Japanese Patent Application No. 2023-054499 filed with the Japan Patent Office on March 30, 2023. The priority application is incorporated herein by reference in its entirety.

The present invention relates to an oil-based food product for coating.

### Background Art

A food product obtained by coating a water-containing food product with an oil-based food product is widely used in terms of flavor, good appearance, and development of a variety of products. Among oil-based food products, chocolate and food products coated with chocolate coating are also used for the purpose of imparting a high-grade feeling, and are widely preferred.

Typically, chocolate using cocoa mass or cocoa powder has been widely used for coating applications, but in recent years, colored chocolate having various color tones has also been used for the purpose of developing a variety of products. These oil-based food products for coating are required to have a good gloss for a good appearance when coated.

Patent Document 1 describes an invention relating to chocolate for coating, containing a polyglycerol condensed ricinoleate and a fiber such as a cocoa fiber.

Patent Document 2 describes an invention relating to an oil-based food product material for coating a frozen dessert in which a starch hydrolysate and a sucrose fatty acid ester are used to suppress an increase in viscosity due to mixing of a trace amount of water during coating.

Patent Document 3 describes an invention related to a method for producing a water-containing heat-resistant chocolate with which a water-containing chocolate dough can be prepared by stepwise addition of water, without viscosity increase and with a fluid pasty state being maintained.

### Citation List

### Patent Document

Patent Document 1: JP 2012-110268 A
Patent Document 2: JP 2017-042087 A
Patent Document 3: JP 2017-121228 A

### Summary of Invention

### Technical Problem

Patent Document 1 describes an invention relating to an oil-based food product having a good gloss. Patent Document 2 discloses an invention in which an increase in viscosity due to addition of water is suppressed by blending a dextrin. However, since it is necessary to add a fiber or a dextrin, there may be a limitation on use of other raw materials or adjustment of flavor.

In Patent Document 3, it is possible to control an increase in viscosity during a process of producing a chocolate dough. However, this patent document does not suggest solving the problem of an increase in viscosity over time due to a gradual increase in water during an operation of coating chocolate.

Although the inventors have conducted intensive studies with reference to the background art, it is unclear what the specific problem is. During the studies, the inventors have found a relationship between maintenance of gloss and maintenance of fluidity of the oil-based food product for coating.

Accordingly, an object of the present invention is to provide an oil-based food product for coating, which maintains fluidity even when water is mixed thereinto, thereby making it possible to control an amount of coating and to obtain an appearance having a good gloss after coating.

### Solution to Problem

As a result of further studies, the inventors have found that the problem of the present invention can be solved by an oil-based food product with an oil content of from 35 to 70 mass%, the oil-based food product: containing a sucrose fatty acid ester having a specific main constituent fatty acid and a specific HLB; and having a yield value, as an indicator of fluidity, adjusted to from 0.1 to 10 Pa at 50°C.

That is, the present invention relates to:
(1) an oil-based food product for coating:
   having an oil content of from 35 to 70 mass%;
   containing a sucrose fatty acid ester with an HLB of from 3 to 17, the sucrose fatty acid ester containing, as a main constituent fatty acid, a saturated fatty acid having from 16 to 24 carbons; and
   having a yield value of from 0.1 to 10 Pa in a molten state at 50°C,
   provided that the main constituent fatty acid of the sucrose fatty acid ester is a fatty acid contained in an amount of 60 mass% or more in constituent fatty acids;
(2) the oil-based food product for coating according to (1), which has a content of a nonfat cocoa solid of 3 mass% or less and a content of a dairy product of from 2 to 30 mass%;
(3) the oil-based food product for coating according to (1) or (2), wherein a content of a saturated fatty acid having 12 carbons and a saturated fatty acid having 14 carbons in all the constituent fatty acids in an oil component is from 15 to 50 mass%;
(4) the oil-based food product for coating according to (1) or (2), wherein, when 0.4 mass% of water is mixed, at 50°C,
   a ratio of a yield value after water mixing to a yield value before water mixing is from 0.5 to 5, and
   a ratio of a B type viscometer viscosity after water mixing to a B type viscometer viscosity before water mixing is from 0.5 to 5;
(5) the oil-based food product for coating according to (1) or (2), wherein a content of cocoa butter in the oil-based food product is 5 mass% or less;
(6) the oil-based food product for coating according to (1) or (2), wherein a food product to be coated is a water-containing food product and has a water activity of 0.75 or more;
(7) a composite food product in which a water-containing food product is coated with the oil-based food product for coating according to (1) or (2);
(8) a method for producing an oil-based food product for coating satisfying all of the following requirements 1) to 3), the method including blending a sucrose fatty acid ester of 2) before refinement, and performing mixing and refining treatment:
   1) having an oil content of from 35 to 70 mass%;
   2) containing a sucrose fatty acid ester with an HLB of from 3 to 17, the sucrose fatty acid ester containing, as a main constituent fatty acid, a saturated fatty acid having from 16 to 24 carbons; and
   3) having a yield value of from 0.1 to 10 Pa at 50°C after production,
      provided that the main constituent fatty acid of the sucrose fatty acid ester refers to a fatty acid contained in an amount of 60 mass% or more in constituent fatty acids;
(9) a method for producing a composite food product, the method including coating a water-containing food product with an oil-based food product for coating obtained by the production method according to (8); and
(10) a method for improving gloss of a composite food product, the method including coating a surface of the composite food product with an oil-based food product for coating,
   the oil-based food product:
   having an oil content of from 35 to 70 mass%;
   containing a sucrose fatty acid ester with an HLB of from 3 to 17, the sucrose fatty acid ester containing, as a main constituent fatty acid, a saturated fatty acid having from 16 to 24 carbons; and
   having a yield value of from 0.1 to 10 Pa in a molten state at 50°C.

In other words, the present invention also relates to:
(21) an oil-based food product for coating satisfying all of the following 1) to 3):
   1) having an oil content of from 35 to 70 mass%;
   2) containing a sucrose fatty acid ester with an HLB of from 3 to 17, the sucrose fatty acid ester containing, as a main constituent fatty acid, a saturated fatty acid having from 16 to 24 carbons; and
   3) having a yield value of from 0.1 to 10 Pa in a molten state at 50°C,
      provided that the main constituent fatty acid of the sucrose fatty acid ester refers to a fatty acid contained in an amount of 60 mass% or more in constituent fatty acids;
(22) the oil-based food product for coating according to (21), which further satisfies 4):
   4) having a content of a nonfat cocoa solid of 3 mass% or less and a content of a dairy product of from 2 to 30 mass%;
(23) an oil-based food product for coating satisfying all of the following 1) to 5):
   1) having an oil content of from 35 to 70 mass%;
   2) containing a sucrose fatty acid ester with an HLB of from 3 to 17, the sucrose fatty acid ester containing, as a main constituent fatty acid, a saturated fatty acid having from 16 to 24 carbons;
   3) having a yield value of from 0.1 to 10 Pa in a molten state at 50°C;
   4) having a content of a nonfat cocoa solid of 3 mass% or less and a content of a dairy product of from 5 to 20 mass%; and
   5) having a content of cocoa butter of 5 mass% or less in the oil-based food product,
      provided that the main constituent fatty acid of the sucrose fatty acid ester refers to a fatty acid contained in an amount of 60 mass% or more in constituent fatty acids;
(24) the oil-based food product for coating according to any one of (21) to (23), wherein a total content of a saturated fatty acid having 12 carbons and a saturated fatty acid having 14 carbons in all the constituent fatty acids in an oil component is from 15 to 50 mass%;
(25) the oil-based food product for coating according to any one of (21) to (23), wherein, when 0.4 mass% of water is mixed, at 50°C,
   a ratio of a yield value after water mixing to a yield value before water mixing is from 0.5 to 5, and
   a ratio of a B type viscometer viscosity after water mixing to a B type viscometer viscosity before water mixing is from 0.5 to 5;
(26) the oil-based food product for coating according to (21) or (22), wherein a content of cocoa butter in the oil-based food product is 5 mass% or less;
(27) the oil-based food product for coating according to any one of (21) to (23), wherein a food product to be coated is a water-containing food product and has a water activity of 0.75 or more;
(28) a composite food product in which a water-containing food product is coated with the oil-based food product for coating according to any one of (21) to (23);
(29) a method for producing an oil-based food product for coating satisfying all of the following requirements 1) to 3), the method including blending a sucrose fatty acid ester of 2) before refinement, and performing mixing and refining treatment:
   1) having an oil content of from 35 to 70 mass%;
   2) containing a sucrose fatty acid ester with an HLB of from 3 to 17, the sucrose fatty acid ester containing, as a main constituent fatty acid, a saturated fatty acid having from 16 to 24 carbons; and
   3) having a yield value of from 0.1 to 10 Pa at 50°C after production,
      provided that the main constituent fatty acid of the sucrose fatty acid ester refers to a fatty acid contained in an amount of 60 mass% or more in constituent fatty acids;
(30) a method for producing a composite food product, the method including coating a water-containing food product with an oil-based food product for coating obtained by the production method according to (29);
(31) a method for improving gloss of a composite food product, the method including coating a surface of the composite food product with an oil-based food product for coating,
   the oil-based food product:
   having an oil content of from 35 to 70 mass%;
   containing a sucrose fatty acid ester with an HLB of from 3 to 17, the sucrose fatty acid ester containing, as a main constituent fatty acid, a saturated fatty acid having from 16 to 24 carbons, and
   having a yield value of from 0.1 to 10 Pa in a molten state at 50°C; and
(32) a method for maintaining fluidity of an oil-based food product for coating so that the oil-based food product for coating satisfies the following requirements A) and B) by using an oil-based food product for coating obtained by the production method according to (29):
   when 0.4 mass% of water is mixed, at 50°C,
   A) a ratio of a yield value after water mixing to a yield value before water mixing is from 0.5 to 5, and
   B) a ratio of a B type viscometer viscosity after water mixing to a B type viscometer viscosity before water mixing is from 0.5 to 5.

### Advantageous Effects of Invention

According to the present invention, it is possible to provide an oil-based food product for coating, which maintains fluidity even when water is mixed thereinto. Therefore, even when it is used in continuous production of composite food products, the amount of coating on a water-containing food product can be controlled. Further, the oil-based food product for coating can maintain fluidity even when water is mixed thereinto, and thus can maintain the quality of good gloss after coating even in continuous production.

By using the oil-based food product for coating according to the present invention for coating, it is possible to provide a composite food product having a controlled amount of coating and an appearance with a good gloss.

### Description of Embodiments

Embodiments of the present invention will be described in detail below.

The oil-based food product in the present invention is a food product in which oils and/or fats form a continuous phase, and particularly refers to chocolate. The term "chocolate(s)" as used herein is not limited to chocolate, quasi-chocolate, and chocolate-using food products as defined by the Japan National Chocolate Industry Fair Trade Council and the Fair Trade Council of the Chocolate-Using Food Products, and refers to food products containing an oil and/or fat as an essential component and including oil and/or fat processed food products which use cocoa mass, cocoa powder, whole milk powder, dried fruit juice powder, dried vegetable powder, plant milk powder, cocoa butter, cocoa butter alternatives, hard butter and the like.

The oil-based food product for coating of the present invention refers to chocolates for coating (coating or covering) the whole or a part of a surface of, particularly, a confectionery or bakery food product.

In the present invention, the oil content contained in the oil-based food product for coating is from 35 to 70 mass%, preferably from 36 to 65 mass%, more preferably from 37 to 63 mass%, or from 38 to 61 mass% with respect to the whole oil-based food product for coating. By adjusting the oil content to an appropriate range, the operation of coating the water-containing food product with the oil-based food product can be simplified. When the oil content is less than 35 mass%, it may be difficult to control the amount of coating because of low fluidity. When the oil content is more than 70 mass%, a good flavor for coating may not be obtained, and an oily feeling may become strong.

The oil content in the oil-based food product means mass% including all the oils and/or fats contained in whole milk powder or the like.

In an embodiment, the oil-based food product for coating according to the present invention can have a reduced variation in amount of coating when the water-containing food product is coated with the oil-based food product for coating, and thus the amount of coating can be controlled to be constant even in the case of continuous coating. In general, the amount of coating of the oil-based food product affects the fluidity of the oil-based food product. Therefore, in the case where a water-containing food product is coated with the oil-based food product, the oil content is adjusted or the temperature of the oil-based food product during the coating operation is adjusted, in order to adjust the fluidity.

However, gradual change in fluidity when the water-containing food product is continuously coated with the oil-based food product causes a change in basis weight, and it may be difficult to keep the quality of the composite food product constant.

In an embodiment, the oil-based food product for coating according to the present invention can maintain fluidity even when water is mixed thereinto, and thus the amount of coating can be controlled to be constant.

The oil and/or fat used in the oil-based food product for coating according to the present invention is not particularly limited, and examples of usable oils and/or fats can include vegetable oils and/or fats, such as soybean oil, sunflower seed oil, cottonseed oil, rapeseed oil, high erucic acid rapeseed oil, peanut oil, rice bran oil, corn oil, safflower oil, olive oil, kapok oil, sesame oil, evening primrose oil, palm oil, palm kernel oil, coconut oil, and medium-chain triglycerides (MCT); animal oils and/or fats such as milk fat, beef tallow, and lard; algae oils; oils and/or fats derived from microbial fermentation; and their hydrogenated oils, fractionated oils, hydrogenated fractionated oils, fractionated hydrogenated oils, and processed oils and/or fats obtained by interesterification and the like; and furthermore mixed oils and/or fats thereof.

The high erucic acid rapeseed oil refers to one having an erucic acid content of 30 mass% or more in the constituent fatty acid composition.

In an embodiment, the oil-based food product for coating according to the present invention contains a sucrose fatty acid ester. The content of the sucrose fatty acid ester is preferably from 0.05 to 1 mass%, more preferably from 0.08 to 0.8 mass%, and most preferably from 0.09 to 0.6 mass%. By incorporating an appropriate amount of sucrose fatty acid ester, the fluidity can be maintained even when water is mixed into the oil-based food product for coating. In addition, when a water-containing food product is coated with the oil-based food product for coating which can maintain fluidity, a good gloss can be maintained.

In the present invention, the HLB is an abbreviation of Hydrophilic-Lipophilic Balance, which refers to a balance between hydrophilicity and lipophilicity, and is an index for determining whether an emulsifier is hydrophilic or lipophilic. The HLB takes a value of from 0 to 20, and a smaller HLB value indicates stronger lipophilicity. The HLB of the sucrose fatty acid ester used in the oil-based food product for coating according to the present invention is preferably from 3 to 17, more preferably from 4 to 16, more preferably from 5 to 16, from 6 to 16, from 6 to 14, or from 6 to 12, and most preferably from 6 to 10. By using the sucrose fatty acid ester having a predetermined HLB, the fluidity can be maintained even when water is mixed into the oil-based food product for coating. In addition, when a water-containing food product is coated with the oil-based food product for coating which can maintain fluidity, a good gloss can be maintained.

In an embodiment, the sucrose fatty acid ester contained in the oil-based food product for coating according to the present invention is one or more sucrose fatty acid esters selected from those containing, as a main constituent fatty acid, a saturated fatty acid having from 16 to 24 carbons. Preferably, the main constituent fatty acid is a saturated fatty acid having from 16 to 20 carbons. More preferably, the main constituent fatty acid is a saturated fatty acid having from 16 to 18 carbons. In the present invention, the main constituent fatty acid refers to a fatty acid contained in an amount of 60 mass% or more in constituent fatty acids.

The food product to be coated with the oil-based food product for coating according to the present invention is preferably a water-containing food product, and the effects of the present invention can be easily obtained. The water-containing food product to be coated preferably has a water activity of 0.75 or more at 25°C. More specifically, when the water activity is from 0.75 to 0.99, from 0.76 to 0.98, or from 0.76 to 0.97, the effects of the present invention are more easily obtained. When the water activity is low, the amount of water mixed into the oil-based food product for coating due to contact with the water-containing food product during the coating operation is small, and thus problems such as deterioration of fluidity are less likely to occur. When the water activity of the water-containing food product is 0.75 or more, water is likely to be mixed into the oil-based food product for coating during the coating operation, and the fluidity may be decreased or the gloss of the oil-based food product coated on the water-containing food product and solidified may be decreased. Therefore, the effects of the present invention are easily exhibited.

The water activity can be measured by, for example, AQUA LAB (available from Meter Japan, Inc.).

The water-containing food product coated with the oil-based food product for coating in the present invention is not particularly limited as long as it is a confectionery or bakery product. Examples of the confectionery can include confectioneries such as manju (steamed bean-jam bun), steamed yokan (sweet beans jelly), castella, dorayaki (bean-jam pancake), imagawayaki (thick pancake containing bean jam), taiyaki (Japanese fish-shaped pancake filled with bean jam), kintsuba (sweet bean paste wrapped in wheat-flour dough), waffles, chestnut manju, mooncakes, bolo (small round cookie), yatsuhashi (cinnamon-seasoned rice flour cracknel), rice crackers, karinto (fried dough cookie), sponge cakes, Swiss rolls, angel cakes, pound cakes, Baumkuchen, fruit cakes, madeleines, cream puffs, mille-feuille, apple pies, tarts, biscuits, cookies, crackers, steamed bread, pretzels, wafers, snacks, pizza pies, crepes, souffles, and beignets. Examples of fruits can include fruits such as banana, apple and strawberry. Examples of the bakery product can include food products such as white bread, hot dog buns, fruit bread, corn bread, butter rolls, hamburger buns, doughnuts, French bread, rolls, sweet bread, sweet dough, hardtack, muffins, bagels, croissants, Danish pastries, and naan bread.

More preferred examples of the water-containing food product used in an embodiment of the present invention include confectioneries and bakery products such as sponge cakes, Swiss rolls, angel cakes, pound cakes, Baumkuchen, cream puffs, hot dog buns, butter rolls, doughnuts, rolls, croissants, and Danish pastries.

The water activities of the water-containing food products at 25°C are, for example, 0.85 for Baumkuchen, 0.92 for yeast doughnuts, 0.77 for cake doughnuts, 0.93 for hot dog buns, and 0.83 for croissants.

In an embodiment, the oil-based food product for coating according to the present invention can maintain fluidity even when water is mixed thereinto. The fluidity can be generally measured using a viscometer. The viscometer is not particularly limited as long as it measures the viscosity of a fluid having a non-Newtonian characteristic, and in general, a BM type, a BH type, a BL type or the like among B type viscometers can be used, and the viscosity can be measured.

As an index for evaluating fluidity, a yield value or plastic viscosity can be used. The yield value and the plastic viscosity can be calculated from results obtained by measuring shear stress when a shear rate is changed. An instrument used for measurement and calculation is not particularly limited, and, for example, the yield value and the plastic viscosity can be calculated from the shear stress measured using an instrument such as Rheolab-QC available from Anton Paar GmbH, for example. For the calculation, an approximation formula defined in IOCCC2000 and the like can be adopted.

To be more specific, in accordance with the conditions defined in IOCCC2000, the shear stress is measured while decelerating from 50 rotations/second to 2 rotations/second over 180 seconds, the measured value is approximated by the following equation, and the constant a in this case can be determined as the yield value. In this case, the constant b represents the plastic viscosity. y(1/p) = a + b·x(1/p)

A degree of viscosity increase of the oil-based food product can be evaluated by confirming the fluidity such as the viscosity, yield value, and plastic viscosity.

In an embodiment, the oil-based food product for coating according to the present invention has a yield value of from 0.1 to 10 Pa in a molten state at 50°C. The yield value is more preferably from 0.3 to 9 Pa, and even more preferably from 0.4 to 9 Pa or from 0.5 to 8 Pa. The oil-based food product for coating according to the present invention is mixed with water by coming into contact with a water-containing food product when used for coating application after melting. When the yield value at the time of melting before water mixing is within a predetermined range, the oil-based food product for coating can be used for coating applications.

Since the yield value for coating applications is desirably 20 Pa or less, the yield value is required to be 20 Pa or less even after water is mixed. The yield value is required to be more desirably 18 Pa or less, and even more desirably 16 Pa or less or 15 Pa or less.

In addition, the viscosity of the oil-based food product for coating according to an embodiment of the present invention is preferably from 200 to 7000 mPa·s in a molten state at 50°C. The viscosity refers to a viscosity as measured by a B type viscometer, and in particular, a viscosity as measured by a BM type viscometer can be used for quality evaluation. The viscosity at the time of melting is more preferably from 250 to 6800 mPa·s, and even more preferably from 300 to 6500 mPa·s or from 350 to 6000 mPa·s. The oil-based food product for coating according to the present invention is mixed with water by coming into contact with a water-containing food product when used for coating application after melting. When the viscosity at the time of melting before water mixing is within a predetermined range, the oil-based food product for coating can be used for coating applications.

Since the viscosity as measured by a B type viscometer for coating applications is desirably 10000 mPa·s or less, the viscosity is required to be 10000 mPa·s or less even after water is mixed. It is more desirably 9000 mPa·s or less, and even more desirably 8000 mPa·s or less or 7000 mPa·s or less.

In the present invention, the value as measured by the BM type viscometer is a value as measured at 50°C using a No. 3 rotor at 12 rpm. When the viscosity is too high to be measured with the No. 3 rotor, a No. 4 rotor is used.

In an embodiment, the viscosity increase of the oil-based food product for coating according to the present invention can be suppressed when water is mixed thereinto. As one index, when 0.4 mass% of water is mixed into the oil-based food product for coating, the ratio of the yield value at 50°C after water mixing to the yield value at 50°C before water mixing can be suppressed to from 0.5 to 5. A more desirable range is from 0.7 to 4.5 or from 0.9 to 4, and even more desirably from 1 to 3.5. When the yield value is in an appropriate range before and after water mixing, it can be determined that sufficient fluidity is maintained.

In addition, in an embodiment, the ratio of the BM type viscometer viscosity at 50°C after water mixing to that before water mixing, of the oil-based food product for coating according to the present invention, can be suppressed to from 0.5 to 5. The ratio can be suppressed to a range of more desirably from 0.6 to 4.5 or from 0.7 to 4, and even more preferably from 0.8 to 3.5. When the yield value is in an appropriate range before and after water mixing, it can be determined that sufficient fluidity is maintained.

When both the yield value and the value as measured by the BM type viscometer satisfy the above conditions, it can be determined that the coating operation is good and that the fluidity is maintained.

Since the fluidity is maintained, molding and coating operation on an edible material can be performed without problems.

Furthermore, the oil-based food product for coating according to the present invention maintains fluidity, and the gloss of the oil-based food product for coating coated on the water-containing food product and solidified is as good as that before water mixing. This means that it is possible to continuously produce a group of products having a good gloss even if water is mixed, and thus it is possible to continuously produce products having stable quality.

In an embodiment, the oil-based food product for coating according to the present invention contains about from 0.3 to 2 mass% of water even before water mixing. This is not substantially due to addition of water, but due to a small amount of water contained in raw materials such as sugar and powdered milk, and does not directly affect the deterioration of fluidity. When water is newly mixed in addition to the small amount of water derived from these raw materials, fluidity may be deteriorated. Examples of the cause of water mixing into the oil-based food product include a case where water is unintentionally mixed into the oil-based food product, a case where the oil-based food product is handled in a high-humidity working environment, and a case where water is mixed by bringing the water-containing food product to be coated into contact with the oil-based food product. The oil-based food product for coating according to the present invention can be applied to any of these cases.

In the case of producing a composite food product coated with an oil-based food product, a coating apparatus called an enrober is often used for industrial continuous production. In the case of using the enrober, the water-containing food product is coated with the molten oil-based food product and sent to a cooling step by a belt conveyor. When the oil-based food product is coated, water derived from the water-containing food product is mixed into the oil-based food product. Then, an amount of the oil-based food product used for coating and thus reduced is newly supplied. When composite food products are continuously produced using an enrober, about from 0.1 to 1.5 mass% of water is mixed into an oil-based food product over time depending on the amount of water of the water-containing food product to be coated. Even after water is mixed, the oil-based food product in a dissolving tank of the enrober is stirred to such an extent that it is circulated through the enrober, and it is difficult to perform stirring and mixing as performed in the production process of chocolates.

The oil-based food product for coating according to the present invention can be manually coated on the water-containing food product without using an enrober while keeping the temperature of the molten oil-based food product in a container.

In any case, when the fluidity of the oil-based food product for coating deteriorates, the coating operation becomes difficult. Therefore, it is desired to maintain the fluidity even when water is gradually mixed, in order to control the amount of coating on the water-containing food product and to make the quality of the composite food product constant. In an embodiment, the oil-based food product for coating according to the present invention maintains fluidity, and thus the quality of the composite food product can be made constant. Further, since the gloss of the appearance is good, the quality of the composite food product improved as compared to typical composite food products can be maintained constant.

In the present invention, the nonfat cocoa solid refers to a portion of cocoa-derived materials, such as cocoa mass or cocoa powder, from which cocoa butter and water have been removed. In the present invention, the content of the nonfat cocoa solid is preferably 3 mass% or less. Examples of oil-based food products having a content of the nonfat cocoa solid of 3 mass% or less include white chocolate and colored chocolate such as caramel chocolate and strawberry chocolate. Many of these oil-based food products correspond to chocolates containing no or a small amount of nonfat cocoa solid, unlike so-called bitter chocolate, sweet chocolate, and the like.

The present invention exhibits the effect of maintaining gloss particularly when the content of the nonfat cocoa solid contained in the oil-based food product for coating is low. The present invention exhibits the effect particularly when the content of the nonfat cocoa solid is 2 mass% or less or 1 mass% or less, and the effect is most apparent when the content of the nonfat cocoa solid is less than 1 mass%. Further, when the nonfat cocoa solid is not contained, the present invention exhibits the effect.

When a nonfat cocoa solid is blended in colored chocolate intended for development of a variety of products, not only the flavor may become similar to that of known chocolate, but also the color tone may not be vivid. Therefore, the good appearance of the oil-based food product for coating having a low content of the nonfat cocoa solid is useful for developing a variety of products.

Preferred embodiments of the oil-based food product for coating according to the present invention include a dairy product. The dairy product refers to all raw materials derived from raw milk having been used in chocolates, and examples thereof include whole milk powder, skim milk powder, whey powder, butter milk powder, and cream powder. For use in chocolates, the dairy product is preferably in the form of a powder having a water content of less than 10 mass%. The content of the dairy product in the oil-based food product for coating according to the present invention is preferably from 2 to 30 mass%. The content is more preferably from 3 to 25 mass% or from 4 to 23 mass%, and even more preferably from 5 to 20 mass% or from 6 to 18 mass%.

In an embodiment, the oil component contained in the oil-based food product for coating according to the present invention contains a saturated fatty acid having 12 carbons and a saturated fatty acid having 14 carbons in a total amount of from 15 to 50 mass% in all the constituent fatty acids in the oil component. The total amount is more preferably from 18 to 45 mass% and even more preferably from 20 to 43 mass%. When the saturated fatty acid having 12 carbons and the saturated fatty acid having 14 carbons are contained in an appropriate amount in the oil component, a good gloss can be obtained.

The fatty acid composition of the oil and/or fat shall be a value as measured in accordance with the method specified in Japanese Oil Chemists' Society Standard Oil Analysis Test Method (1996 edition) 2.4.1.2 Methyl Esterification Method (boron trifluoride-methanol method).

By using an interesterified oil and/or fat containing a saturated fatty acid having 12 carbons and a saturated fatty acid having 14 carbons as constituent fatty acids as the oil and/or fat contained in the oil-based food product for coating according to the present invention, the effects of the present invention, i.e., improvement and maintenance of gloss, are further exhibited.

In an embodiment, the oil-based food product for coating according to the present invention has a content of cocoa butter of 5 mass% or less in the oil-based food product. In general, an oil-based food product containing a large amount of cocoa butter can be given a good gloss by tempering treatment. In addition, the oil-based food product has meltability in the mouth, which is typical of chocolate, because it contains a large amount of cocoa butter. On the other hand, when cocoa butter is contained in an amount of 5 mass% or less in the oil-based food product, which is a preferred embodiment of the oil-based food product for coating according to the present invention, a better gloss and a good meltability in the mouth can be obtained even without tempering treatment.

In the present invention, the content of cocoa butter in the oil-based food product for coating is more preferably from 0 to 4 mass% in the oil-based food product. The content is even more preferably from 0 to 3 mass%.

The content of cocoa butter in the oil component is preferably from 0 to 10 mass%, more preferably from 0 to 9 mass%, and even more preferably from 0 to 8 mass%.

The oil-based food product for coating according to the present invention has a good gloss after coated on the water-containing food product and solidified. Also, the gloss can be visually confirmed, but can be simply evaluated based on the glossiness measured by a glossmeter. For example, a handy glossmeter <Gloss Checker> HORIBA IG-320 available from HORIBA, Ltd. is suitably used in the measurement by a glossmeter.

In the present invention, as an example of measurement results, the glossiness (incident angle: 60°) at the time of solidification at 20°C is 7 or more, which is a good gloss. Hereinafter, unless otherwise specified, the "glossiness" is measured under the condition for measuring the glossiness (incident angle: 60°) at the time of solidification at 20°C.

In addition, the oil-based food product for coating according to the present invention remarkably exhibits the effect of improving the gloss when the content of the nonfat cocoa solid is low.

As a method for measuring the glossiness, chocolate is molten at 50°C, coated on a plastic film, and solidified under an atmosphere of 20°C, and then the glossiness is measured by a glossiness measuring instrument.

The numerical value of the glossiness is suitably 7 or more, and further preferably 10 or more.

The method for producing the oil-based food product for coating of the present invention can be carried out in the same manner as that for producing a general chocolate. Specifically, the oil-based food product for coating can be obtained by appropriately selecting and mixing raw materials such as a saccharide, various powdered raw materials such as powdered milk, an emulsifier, a flavor, and a pigment with an oil and/or fat, and performing roll-refining as a refining step, and conching as a kneading step or mixing treatment as a mixing step. Alternatively, a production method such as a production method in which a mixing step and a refining step are performed in parallel using a ball mill, a bead mill, or the like can also be used.

Among them, as a more preferable production method, a sucrose fatty acid ester having an HLB of from 3 to 17 and containing, as a main constituent fatty acid, a saturated fatty acid having from 16 to 24 carbons is added before the refining step such as roll-refining and subjected to refining treatment in the same manner as for powdered raw materials.

By adding the sucrose fatty acid ester before the refining step, the dispersibility thereof in the oil-based food product for coating is improved, and the effects of improving the gloss and maintaining the fluidity are easily exhibited.

After the mixing step, the oil-based food product for coating prepared and finished has a yield value of from 0.1 to 10 Pa at 50°C.

### Examples

Hereinafter, the present invention will be described in more detail with reference to Examples, but the spirit of the present invention is not limited to the following Examples. In the examples, values in % and parts are based on mass.

### • Preliminary study

### · Preparation of oil-based food product for coating

Sugar and powdered raw materials such as whole milk powder were mixed with a part of the molten vegetable oil and/or fat in a mixer according to the formulations as shown in Table 1, and the mixture was refined in a roll refiner, followed by mixing while adding the remaining oil and/or fat and lecithin, thereby preparing oil-based food products for coating.

As the vegetable oil and/or fat W in the table, a fractionated soft palm oil having an iodine value of 68 was used.

As the vegetable oil and/or fat X, an interesterified oil and/or fat obtained by subjecting a fractionated palm oil hard fraction and coconut oil to random interesterification with sodium methylate, followed by purification by a common method was used.

In the fatty acids constituting the vegetable oil and/or fat X, the total amount of saturated fatty acids having 12 carbons and saturated fatty acids having 14 carbons was 44.5 mass%.

### · Verification 1 of fluidity at the time of water mixing

The prepared oil-based food products for coating were placed in a mixer tank with a cover, and 0.02% or 0.04% of water was added every 10 minutes while the oil-based food product was molten at 50°C and stirred very gently at 32 rpm. Fluidity was checked at regular time intervals.

In the measurement of the viscosity for verifying the particle size property, 200 g of the oil-based food product was collected in a cup, and the viscosity was measured at 50°C by a BM type viscometer.

The viscosity was measured by the BM type viscometer using a No. 3 rotor at 12 rpm, or using a No. 4 rotor at 12 rpm when the viscosity exceeded 10000 mPa·s. When measurement was not possible even using the No. 4 rotor at 12 rpm, the viscosity was defined as unmeasurable.

For the same sample, the shear stress at 50°C was measured using Rheolab-QC available from Anton Paar GmbH, and the yield value was calculated. For the calculation, the approximation formula defined in IOCCC2000 was adopted.

The results of fluidity are shown in Table 2. The post-production yield value and the post-production B type viscometer viscosity in the table indicate the yield value and the viscosity before water mixing.

### · Verification 2 of fluidity at the time of water mixing

Oil-based food products (200 g) similar to the oil-based food products used in "Verification 1 of fluidity at the time of water mixing" were collected in a cup, the temperature thereof was adjusted to 50°C, and the viscosity at this point was measured by a BM type viscometer. Next, an amount of water corresponding to 0.2 mass%, 0.4 mass% or 0.7 mass% was added to 300 g of the separately collected oil-based food products, the mixtures were stirred thoroughly, the temperature thereof was adjusted to 50°C, and the viscosity was measured by a BM type viscometer.

Further, for each sample, the shear stress at 50°C was measured using Rheolab-QC available from Anton Paar GmbH, and the yield value was calculated.

The results are shown in Table 3. The post-production yield value and the post-production B type viscometer viscosity in the table indicate the yield value and the viscosity before water mixing as in Table 2.

**[Table 1]**

| | Comparative Example 1 |
|---|---|
| Whole milk powder [parts] | 10.3 |
| Sugar [parts] | 44.1 |
| Cocoa butter [parts] | 2.8 |
| Vegetable oil and/or fat W [parts] | 4.3 |
| Vegetable oil and/or fat X [parts] | 38.5 |
| Lecithin [parts] | 0.3 |

As a result, it was shown that when water was continuously mixed, the change in yield value and the change in B type viscometer viscosity were increased with time, and the viscosity was increased.

In addition, when coating was performed on the plastic film, the amount of coating of the oil-based food products for coating confirmed to be increased in viscosity was significantly increased as compared with that of the oil-based food products for coating before addition of water. When an attempt was made to shake off the oil-based food products in order to reduce the amount of coating, the movement caused irregularities at the coated surface.

On the other hand, from the results of "Verification 2 of fluidity at the time of water mixing" in which a predetermined amount of water was directly mixed, a result close to the yield value when the increase in viscosity was confirmed in "Verification 1 of fluidity at the time of water mixing" was obtained in the case where 0.4 mass% of water was mixed, and it was difficult to keep the amount of coating constant.

Therefore, it was determined that the degree of increase in viscosity in the case where a trace amount of water is continuously mixed can be assumed from the results when from 0.2 mass% to 0.4 mass% of water is mixed at a time.

**[Table 2]**

| | Mixing every 0.02% | Mixing every 0.04% |
|---|---|---|
| Post-production yield value [Pa] | 1.9 | 1.9 |
| Post-production B type viscometer viscosity [mPa·s] | 2050 | 2050 |

| After 2 hours | | |
|---|---|---|
| **Total amount of water mixed** | **0.24%** | **0.48%** |
| Yield value [Pa] | 4.3 | 18.4 |
| B type viscometer viscosity [mPa·s] | 3800 | 17500 |
| Change in yield value (after water mixing/before water mixing) | 2.4 | 9.7 |
| Change in B type viscometer viscosity (after water mixing/before water mixing) | 1.9 | 8.5 |

| **After 3 hours** | | |
|---|---|---|
| **Total amount of water mixed** | **0.36%** | **0.72%** |
| Yield value [Pa] | 5.6 | 68.9 |
| B type viscometer viscosity [mPa·s] | 4550 | 47000 |
| Change in yield value (after water mixing/before water mixing) | 2.9 | 36.2 |
| Change in B type viscometer viscosity (after water mixing/before water mixing) | 2.2 | 22.9 |

| **After 6 hours** | | |
|---|---|---|
| **Total amount of water mixed** | **0.72%** | **-** |
| Yield value [Pa] | 9.1 | Unmeasurable |
| B type viscometer viscosity [mPa·s] | 6800 | Unmeasurable |
| Change in yield value (after water mixing/before water mixing) | 4.8 | - |
| Change in B type viscometer viscosity (after water mixing/before water mixing) | 3.3 | - |

| **After 8 hours** | | |
|---|---|---|
| **Total amount of water mixed** | **0.96%** | **-** |
| Yield value [Pa] | 10.6 | Unmeasurable |
| B type viscometer viscosity [mPa·s] | 8150 | Unmeasurable |
| Change in yield value (after water mixing/before water mixing) | 5.6 | - |
| Change in B type viscometer viscosity (after water mixing/before water mixing) | 4.0 | - |

| **After 10 hours** | | |
|---|---|---|
| **Total amount of water mixed** | **1.20%** | **-** |
| Yield value [Pa] | 51.6 | Unmeasurable |
| B type viscometer viscosity [mPa·s] | 14500 | Unmeasurable |
| Change in yield value (after water mixing/before water mixing) | 27.2 | - |
| Change in B type viscometer viscosity (after water mixing/before water mixing) | 7.0 | - |

**[Table 3]**

| | Comparative Example 1 |
|---|---|
| Post-production yield value [Pa] | 1.9 |
| Post-production B type viscometer viscosity [mPa·s] | 2050 |

| **Viscosity after 0.2% water mixing** | |
|---|---|
| Yield value [Pa] | 15.4 |
| B type viscometer viscosity [mPa·s] | 4500 |
| Change in yield value (after water mixing/before water mixing) | 8.8 |
| Change in B type viscometer viscosity (after water mixing/before water mixing) | 2.4 |

| **Viscosity after 0.4% water mixing** | |
|---|---|
| Yield value [Pa] | 57.8 |
| B type viscometer viscosity [mPa·s] | 25500 |
| Change in yield value (after water mixing/before water mixing) | 32.8 |
| Change in B type viscometer viscosity (after water mixing/before water mixing) | 13.6 |

| **Viscosity after 0.7% water mixing** | |
|---|---|
| Yield value [Pa] | Unmeasurable |
| B type viscometer viscosity [mPa·s] | Unmeasurable |
| Change in yield value (after water mixing/before water mixing) | - |
| Change in B type viscometer viscosity (after water mixing/before water mixing) | - |

### • Study 1

In the same manner as in "Preparation of oil-based food product for coating" described above, cocoa mass, powdered raw materials, and a sucrose fatty acid ester were mixed with a part of the molten vegetable oil and/or fat in a mixer according to the formulation shown in Table 4, and the mixture was refined in a roll refiner, followed by mixing while adding the remaining oil and/or fat and lecithin, thereby preparing oil-based food products for coating.

Ryoto Sugar Ester S-770 (available from Mitsubishi Chemical Corporation, HLB: 7, main constituent fatty acid: saturated fatty acid having 16 carbons) was used as the sucrose fatty acid ester a.

The same study as in "Verification 2 of fluidity at the time of water mixing" performed in the preliminary study was performed. The results are listed in Table 5.

### · Coating test

Baumkuchen was coated with the obtained oil-based food products and evaluated according to the following evaluation methods.

The prepared oil-based food products (4.0 g (± 1.0 g)) were coated, in a molten state at 50°C, on the upper part of the surface of Baumkuchen (available from Ace Bakery Co., Ltd.: thick-sliced Baumkuchen). While the adhesion method is not particularly limited, about one third of the Baumkuchen was immersed in the oil-based food product in a molten state, and then lifted up and allowed to stand at room temperature of 20°C with a portion to which the oil-based food product adhered facing upward.

The water activity of the Baumkuchen was 0.85 at 25°C.

### · Evaluation of gloss: visual confirmation of appearance

For the gloss, the state in which the Baumkuchen was coated with the oil-based food products was visually confirmed.

Evaluation was carried out according to the following criteria. ∘ or better was determined to be acceptable quality.
⊚: Particularly good, o: good, Δ: slightly dull but within an acceptable range, ×: poor

### · Evaluation of gloss: glossiness

For evaluating the gloss, the glossiness was measured.

The glossiness was measured with a gloss checker (HORIBA IG-320, incident angle: 60°) after chocolates were coated on a plastic film at 50°C and solidified at 20°C for 1 hour.

The obtained oil-based food products for coating were subjected to "Verification 2 of fluidity at the time of water mixing" and "Coating test" described above. The results are listed in Table 5. The "C12 + C14" in the table indicates a content of saturated fatty acids having 12 carbons and saturated fatty acids having 14 carbons.

**[Table 4]**

| | Comparative Example 2 | Example 1 | Comparative Example 3 | Example 2 | Example 3 |
|---|---|---|---|---|---|
| Cocoa mass [parts] | 7.0 | 7.0 | 0 | 0 | 0 |
| Cocoa powder [parts] | 8.0 | 8.0 | 0 | 0 | 2.5 |
| Whole milk powder [parts] | 0.9 | 0.9 | 10.3 | 10.3 | 9.0 |
| Sugar [parts] | 24.7 | 24.7 | 44.1 | 44.1 | 43.0 |
| Lactose [parts] | 3.3 | 3.3 | 0 | 0 | 0.0 |
| Vegetable oil and/or fat W [parts] | 5.0 | 5.0 | 5.6 | 5.6 | 5.5 |
| Vegetable oil and/or fat X [parts] | 51.1 | 51.1 | 40.0 | 40.0 | 40.0 |
| Lecithin [parts] | 0.3 | 0.3 | 0.3 | 0.3 | 0.3 |
| Sucrose fatty acid ester a [parts] | 0 | 0.3 | 0 | 0.3 | 0.3 |
| Oil component/[%] in product | 60.9 | 60.7 | 48.1 | 48.0 | 47.8 |
| Nonfat cocoa solid/[%] in product | 9.8 | 9.8 | 0 | 0 | 2.1 |
| Dairy product/[%] in product | 0.9 | 0.9 | 10.3 | 10.2 | 8.9 |
| Cocoa butter/[%] in product | 4.7 | 4.7 | 0 | 0 | 0.3 |
| Cocoa butter/[%] in oil component | 7.7 | 7.8 | 0 | 0 | 0.6 |
| C12 + C14/[%] in constituent fatty acids | 37.4 | 37.4 | 38.0 | 38.0 | 37.2 |

**[Table 5]**

| | Comparative Example 2 | Example 1 | Comparative Example 3 | Example 2 | Example 3 |
|---|---|---|---|---|---|
| Post-production yield value [Pa] | 0.4 | 0.7 | 1.8 | 2.3 | 2.4 |
| Post-production B type viscometer viscosity [mPa·s] | 300 | 400 | 1875 | 2300 | 2100 |

| **Viscosity after 0.2% water mixing** | | | | | |
|---|---|---|---|---|---|
| Yield value [Pa] | 2.1 | 0.5 | 15.4 | 3.6 | 3.2 |
| B type viscometer viscosity [mPa·s] | 450 | 420 | 4500 | 2700 | 2300 |
| Change in yield value (after water mixing/before water mixing) | 5.4 | 0.7 | 8.8 | 1.5 | 1.3 |
| Change in B type viscometer viscosity (after water mixing/before water mixing) | 1.5 | 1.1 | 2.4 | 1.2 | 1.1 |

| **Viscosity after 0.4% water mixing** | | | | | |
|---|---|---|---|---|---|
| Yield value [Pa] | 7.7 | 1.8 | 57.8 | 5.5 | 4.6 |
| B type viscometer viscosity [mPa·s] | 3800 | 480 | 25500 | 3150 | 2550 |
| Change in yield value (after water mixing/before water mixing) | 19.3 | 2.6 | 32.8 | 2.4 | 1.7 |
| Change in B type viscometer viscosity (after water mixing/before water mixing) | 12.7 | 1.2 | 13.6 | 1.4 | 1.9 |

| **Evaluation of gloss: upper part: glossiness, lower part: visual confirmation** | | | | | |
|---|---|---|---|---|---|
| Amount of water mixed: 0% | 4.3 Δ: Acceptable range | 8.2 ∘: Good | 11.1 ⊚: Particularly good | 23.0 ⊚: Particularly good | 8.8 ∘: Good |
| Amount of water mixed: 0.2% | 3.9 ×: Poor | 7.5 ∘: Good | 7.6 ∘: Good | 15.0 ⊚: Particularly good | 8.0 ∘: Good |
| Amount of water mixed: 0.4% | 2.4 ×: Poor | 7.1 ∘: Good | 4.4 ×: Poor | 14.9 ⊚: Particularly good | 7.7 ∘: Good |

The oil-based food products for coating of the Examples maintained fluidity even when water was mixed thereinto, and had a good gloss. The amount of coating was also easily controlled. With respect to the gloss, in a case where a glossiness of 7 or more was regarded as good gloss, and a glossiness of 10 or more was regarded as particularly good gloss, the evaluation thereof was also in good agreement with the evaluation by visual confirmation.

In the comparative examples in which 0.4% of water was mixed, it was difficult to control the amount of coating within the target range in the coating test. When an attempt was made to shake off the oil-based food products in order to adjust the amount of coating, irregularities were formed at the coated surface.

### • Study 2

In the same manner as in "Preparation of oil-based food product for coating" described above, powdered raw materials and a sucrose fatty acid ester in Examples 4 to 9 and powdered raw materials in the Comparative Examples were mixed with a part of the molten vegetable oil and/or fat in a mixer according to the formulation shown in Table 6, and the mixture was refined in a roll refiner, followed by mixing while adding the remaining oil and/or fat, lecithin, and other emulsifiers (PGPR), thereby preparing oil-based food products for coating having a content of a nonfat cocoa solid of 0 mass%.

A vegetable oil and/or fat y was obtained by mixing a fractionated palm oil hard fraction, coconut oil, and an extremely hydrogenated high erucic acid rapeseed oil at a predetermined ratio, and subjecting the mixture to random interesterification with sodium methylate, followed by purification by a common method. An oil and/or fat obtained by adding an extremely hydrogenated high erucic acid rapeseed oil to the vegetable oil and/or fat y was used as the vegetable oil and/or fat Y. In the fatty acids constituting the vegetable oil and/or fat Y, the total amount of saturated fatty acids having 12 carbons and saturated fatty acids having 14 carbons was 32.3 mass%.

As the vegetable oil and/or fat Z, an oil and/or fat obtained by hydrogenating palm kernel oil to attain an iodine value of 2.5 and then purifying the hydrogenated palm kernel oil by a common method was used. In the fatty acids constituting the vegetable oil and/or fat Z, the total amount of saturated fatty acids having 12 carbons and saturated fatty acids having 14 carbons was 63 mass%.

As the PGPR, SY Glyster CR-350H (available from Sakamoto Yakuhin Kogyo Co., Ltd.) was used.

The obtained oil-based food products for coating were subjected to "Verification 2 of fluidity at the time of water mixing" and "Coating test" described above. The results are shown in Table 7.

**[Table 6]**

| | Example 4 | Example 5 | Example 6 | Example 7 | Example 8 | Example 9 | Comparative Example 4 | Comparative Example 5 |
|---|---|---|---|---|---|---|---|---|
| Whole milk powder [parts] | 12.5 | 15.0 | 10.0 | 7.0 | 7.0 | 7.0 | 7.0 | 7.0 |
| Sugar [parts] | 37.5 | 45.0 | 32.0 | 47.7 | 47.7 | 47.7 | 47.7 | 47.7 |
| Cocoa butter [parts] | 0 | 0 | 0 | 2.5 | 2.5 | 2.5 | 2.5 | 2.5 |
| Vegetable oil and/or fat W [parts] | 6.0 | 5.0 | 5.0 | 4.3 | 4.3 | 7.0 | 4.3 | 4.3 |
| Vegetable oil and/or fat X [parts] | 44.0 | 35.0 | 53.0 | 38.5 | 0 | 0 | 38.5 | 38.5 |
| Vegetable oil and/or fat Y [parts] | 0 | 0 | 0 | 0 | 38.5 | 25.3 | 0 | 0 |
| Vegetable oil and/or fat Z [parts] | 0 | 0 | 0 | 0 | 0 | 10.5 | 0 | 0 |
| Lecithin [parts] | 0.4 | 0.4 | 0.3 | 0.3 | 0.3 | 0.3 | 0.3 | 0.3 |
| Sucrose fatty acid ester a [parts] | 0.2 | 0.2 | 0.3 | 0.3 | 0.3 | 0.3 | 0 | 0 |
| PGPR [parts] | 0 | 0 | 0 | 0 | 0 | 0 | 0 | 0.3 |
| Oil component/[%] in product | 52.8 | 43.3 | 60.2 | 46.8 | 46.8 | 47.0 | 47.0 | 46.8 |
| Dairy product/[%] in product | 12.4 | 14.9 | 9.9 | 7.0 | 7.0 | 7.0 | 7.0 | 7.0 |
| Cocoa butter/[%] in product | 0 | 0 | 0 | 2.5 | 2.5 | 2.5 | 2.5 | 2.5 |
| Cocoa butter/[%] in oil component | 0 | 0 | 0 | 5.3 | 5.3 | 5.3 | 5.3 | 5.3 |
| C12 + C14/[%] in constituent fatty acids | 37.1 | 36.0 | 39.7 | 37.1 | 27.2 | 32.2 | 37.1 | 37.1 |

**[Table 7]**

| | Example 4 | Example 5 | Example 6 | Example 7 | Example 8 | Example 9 | Comparative Example 4 | Comparative Example 5 |
|---|---|---|---|---|---|---|---|---|
| Post-production yield value [Pa] | 2.0 | 8.7 | 0.5 | 4.8 | 5.2 | 5.0 | 8.7 | 2.1 |
| Post-production B type viscometer viscosity [mPa·s] | 1650 | 5850 | 650 | 3400 | 3800 | 3650 | 3250 | 900 |

| **Viscosity after 0.2% water mixing** | | | | | | | | |
|---|---|---|---|---|---|---|---|---|
| Yield value [Pa] | 3.8 | 11.6 | 0.7 | 7.8 | 8.1 | 8.1 | 60.4 | 37.5 |
| B type viscometer viscosity [mPa·s] | 1950 | 6900 | 750 | 5000 | 5200 | 5100 | 16750 | 11500 |
| Change in yield value (after water mixing/before water mixing) | 1.9 | 1.3 | 1.4 | 1.6 | 1.6 | 1.6 | 6.9 | 17.8 |
| Change in B type viscometer viscosity (after water mixing/before water mixing) | 1.2 | 1.2 | 1.2 | 1.5 | 1.4 | 1.4 | 5.2 | 12.8 |

| **Viscosity after 0.4% water mixing** | | | | | | | | |
|---|---|---|---|---|---|---|---|---|
| Yield value [Pa] | 4.0 | 17.0 | 0.8 | 11.2 | 13.9 | 12.0 | Unmeasurable | Unmeasurable |
| B type viscometer viscosity [mPa·s] | 2450 | 9100 | 950 | 7450 | 7900 | 7600 | Unmeasurable | Unmeasurable |
| Change in yield value (after water mixing/before water mixing) | 2.0 | 2.0 | 1.6 | 2.3 | 2.7 | 2.4 | - | - |
| Change in B type viscometer viscosity (after water mixing/before water mixing) | 1.5 | 1.6 | 1.5 | 2.2 | 2.1 | 2.1 | - | - |

| **Evaluation of gloss: upper part: glossiness, lower part: visual confirmation** | | | | | | | | |
|---|---|---|---|---|---|---|---|---|
| Amount of water mixed: 0% | 12.0 ⊚: Particularly good | 11.9 ⊚: Particularly good | 12.4 ⊚: Particularly good | 36.2 ⊚: Particularly good | 35.4 ⊚: Particularly good | 8.2 o: Good | 5.9 Δ: Acceptable range | 6.1 Δ: Acceptable range |
| Amount of water mixed: 0.2% | 10.5 ⊚: Particularly good | 10.1 ⊚: Particularly good | 10.6 ⊚: Particularly good | 19.9 ⊚: Particularly good | 18.6 ⊚: Particularly good | 7.6 ∘: Good | 2.6 ×: Poor | 2.8 ×: Poor |
| Amount of water mixed: 0.4% | 5.1 Δ: Acceptable range | 4.8 Δ: Acceptable range | 6.1 Δ: Acceptable range | 11.2 ⊚: Particularly good | 11.0 ⊚: Particularly good | 7.2 o: Good | - | - |

Even when the amounts of the oil component and the dairy product were changed, the fluidity was maintained in the Examples. Therefore, the amount of coating in the case of coating could be easily controlled. In the Examples, the gloss was also good. In the Comparative Examples, the viscosity increased when water was mixed, and the fluidity could not be maintained. Therefore, it was difficult to control the amount of coating within the target range. When an attempt was made to shake off the oil-based food products in order to adjust the amount of coating, irregularities were formed at the coated surface. The gloss was also poor.

### • Study 3

In the same manner as in "Preparation of oil-based food product for coating" described above, powdered raw materials and a sucrose fatty acid ester were mixed with a part of the molten vegetable oil and/or fat in a mixer according to the formulation shown in Table 8, and the mixture was refined in a roll refiner, followed by mixing while adding the remaining oil and/or fat and lecithin, thereby preparing oil-based food products for coating having a content of a nonfat cocoa solid of 0 mass%.

The obtained oil-based food products for coating were subjected to "Verification 2 of fluidity at the time of water mixing" and "Coating test" described above. The results are shown in Table 9.

**[Table 8]**

| | Example 10 | Example 11 | Example 12 | Example 13 |
|---|---|---|---|---|
| Whole milk powder [parts] | 10.3 | 10.3 | 10.3 | 10.3 |
| Sugar [parts] | 44.1 | 44.1 | 44.1 | 44.1 |
| Cocoa butter [parts] | 2.8 | 2.8 | 2.8 | 2.8 |
| Vegetable oil and/or fat W [parts] | 4.3 | 4.3 | 4.3 | 4.3 |
| Vegetable oil and/or fat X [parts] | 38.5 | 38.5 | 38.5 | 38.5 |
| Lecithin [parts] | 0.3 | 0.3 | 0.3 | 0.3 |
| Sucrose fatty acid ester a [parts] | 0.1 | 0.2 | 0.3 | 0.5 |
| Oil component/[%] in product | 48.1 | 48.0 | 48.0 | 47.9 |
| Dairy product/[%] in product | 10.3 | 10.2 | 10.2 | 10.2 |
| Cocoa butter/[%] in product | 2.8 | 2.8 | 2.8 | 2.8 |
| Cocoa butter/[%] in oil component | 5.8 | 5.8 | 5.8 | 5.8 |
| C12 + C14/[%] in constituent fatty acids | 36.5 | 36.5 | 36.5 | 36.5 |

**[Table 9]**

| | | Example 10 | Example 11 | Example 12 | Example 13 |
|---|---|---|---|---|---|
| Post-production yield value [Pa] | | 2.0 | 3.1 | 2.9 | 4.6 |
| Post-production B type viscometer viscosity [mPa·s] | | 1750 | 2100 | 2350 | 3100 |

| **Viscosity after 0.2% water mixing** | | | | | |
|---|---|---|---|---|---|
| | Yield value [Pa] | 2.7 | 4.4 | 3.6 | 5.4 |
| | B type viscometer viscosity [mPa·s] | 2200 | 2450 | 2800 | 3500 |
| Change in yield value (after water mixing/before water mixing) | | 1.4 | 1.4 | 1.2 | 1.2 |
| Change in B type viscometer viscosity (after water mixing/before water mixing) | | 1.3 | 1.2 | 1.2 | 1.2 |

| **Viscosity after 0.4% water mixing** | | | | | |
|---|---|---|---|---|---|
| | Yield value [Pa] | 6.2 | 5.1 | 5.2 | 6.5 |
| | B type viscometer viscosity [mPa·s] | 4150 | 3150 | 3400 | 4100 |
| Change in yield value (after water mixing/before water mixing) | | 3.0 | 1.6 | 1.8 | 1.4 |
| Change in B type viscometer viscosity (after water mixing/before water mixing) | | 2.4 | 1.5 | 1.4 | 1.2 |

| **Gloss: upper part: glossiness, lower part: visual confirmation** | | | | | |
|---|---|---|---|---|---|
| Amount of water mixed: 0% | | 17.8 ⊚: Particularly good | 35.4 ⊚: Particularly good | 42.3 ⊚: Particularly good | 51.0 ⊚: Particularly good |
| Amount of water mixed: 0.2% | | 18.1 ⊚: Particularly good | 29.2 ⊚: Particularly good | 34.9 ⊚: Particularly good | 49.5 ⊚: Particularly good |
| Amount of water mixed: 0.4% | | 11.4 ⊚: Particularly good | 18.3 ⊚: Particularly good | 20.0 ⊚: Particularly good | 22.7 ⊚: Particularly good |

Even when the amount of the emulsifier added was changed, the fluidity when water was mixed was maintained, the amount of coating at the time of coating could be easily controlled, and the gloss was good.

### • Study 4

In the same manner as in "Preparation of oil-based food product for coating" described above, powdered raw materials and a sucrose fatty acid ester or sorbitan fatty acid ester in Examples 14 to 16 and Comparative Example 9 and powdered raw materials in Comparative Examples 6 and 7 were mixed with a part of the molten vegetable oil and/or fat in a mixer according to the formulation shown in Table 10, and the mixture was refined in a roll refiner, followed by mixing while adding the remaining oil and/or fat and lecithin, thereby preparing oil-based food products for coating having a content of a nonfat cocoa solid of 0 mass%. However, in Comparative Example 6, the sucrose fatty acid ester b was added by being dispersed in the remaining oil and/or fat. In Comparative Example 7, the sucrose fatty acid ester d was added at the same timing as lecithin, and mixing was performed.

The obtained oil-based food products for coating were subjected to "Verification 2 of fluidity at the time of water mixing" and "Coating test" described above. The results are shown in Table 11.

In the preparation of oil-based food products for coating, the following emulsifiers were used in addition to the sucrose fatty acid ester a.
Sucrose fatty acid ester b: Ryoto Sugar Ester S-070 (available from Mitsubishi Chemical Corporation, HLB: 0, main constituent fatty acid: saturated fatty acid having 16 carbons)
Sucrose fatty acid ester c: Ryoto Sugar Ester S-1670 (available from Mitsubishi Chemical Corporation, HLB: 16, main constituent fatty acid: saturated fatty acid having 16 carbons)
Sucrose fatty acid ester d: Ryoto Sugar Ester ER-290 (available from Mitsubishi Chemical Corporation, HLB: 2, main constituent fatty acid: unsaturated fatty acid having 22 carbons)
Sucrose fatty acid ester e: Ryoto Sugar Ester S-570 (available from Mitsubishi Chemical Corporation, HLB: 5, main constituent fatty acid: saturated fatty acid having 16 carbons)
Sorbitan fatty acid ester: Sorman S-300V (available from Riken Vitamin Co., Ltd., HLB: 5.3, main constituent fatty acid: saturated fatty acid having 16 carbons)

**[Table 10]**

| | Example 14 | Comparative Example 6 | Example 15 | Comparative Example 7 | Example 16 | Comparative Example 8 |
|---|---|---|---|---|---|---|
| Whole milk powder [parts] | 10.3 | 10.3 | 10.3 | 10.3 | 10.3 | 10.3 |
| Sugar [parts] | 44.1 | 44.1 | 44.1 | 44.1 | 44.1 | 44.1 |
| Cocoa butter [parts] | 2.8 | 2.8 | 2.8 | 2.8 | 2.8 | 2.8 |
| Vegetable oil and/or fat W [parts] | 4.3 | 4.3 | 4.3 | 4.3 | 4.3 | 4.3 |
| Vegetable oil and/or fat X [parts] | 38.5 | 38.5 | 38.5 | 38.5 | 38.5 | 38.5 |
| Lecithin [parts] | 0.3 | 0.3 | 0.3 | 0.3 | 0.3 | 0.3 |
| Sucrose fatty acid ester a [parts] | 0.3 | 0 | 0 | 0 | 0 | 0 |
| Sucrose fatty acid ester b [parts] | 0 | 0.3 | 0 | 0 | 0 | 0 |
| Sucrose fatty acid ester c [parts] | 0 | 0 | 0.3 | 0 | 0 | 0 |
| Sucrose fatty acid ester d [parts] | 0 | 0 | 0 | 0.3 | 0 | 0 |
| Sucrose fatty acid ester e [parts] | 0 | 0 | 0 | 0 | 0.3 | 0 |
| Sorbitan fatty acid ester [parts] | 0 | 0 | 0 | 0 | 0 | 0.3 |
| Oil component/[%] in product | 48.0 | 48.0 | 48.0 | 48.0 | 48.0 | 48.0 |
| Dairy product/[%] in product | 10.2 | 10.2 | 10.2 | 10.2 | 10.2 | 10.2 |
| Cocoa butter/[%] in product | 2.8 | 2.8 | 2.8 | 2.8 | 2.8 | 2.8 |
| Cocoa butter/[%] in oil component | 5.8 | 5.8 | 5.8 | 5.8 | 5.8 | 5.8 |
| C12 + C14/[%] in constituent fatty acids | 36.5 | 36.5 | 36.5 | 36.5 | 36.5 | 36.5 |

From the results shown in Table 11, in the Examples using the sucrose fatty acid esters a, c, and e, the fluidity was maintained even when not only 0.4% but also 0.7% of water was directly mixed. Therefore, the amount of coating at the time of coating could be easily controlled, and the gloss was also good. The sucrose fatty acid ester c was effective in maintaining fluidity and maintaining a good gloss, but slight oil stains were observed on the surface during storing at 20°C.

**[Table 11]**

| | | Example 14 | Comparative Example 6 | Example 15 | Comparative Example 7 | Example 16 | Comparative Example 8 |
|---|---|---|---|---|---|---|---|
| Post-production yield value [Pa] | | 2.3 | 2.2 | 2.3 | 1.7 | 3.1 | 2.5 |
| Post-production B type viscometer viscosity [mPa·s] | | 2300 | 1850 | 2100 | 1950 | 2700 | 2400 |

| **Viscosity after 0.2% water mixing** | | | | | | | |
|---|---|---|---|---|---|---|---|
| | Yield value [Pa] | 3.6 | 12.7 | 3.5 | 2.0 | 4.7 | 19.7 |
| | B type viscometer viscosity [mPa·s] | 2700 | 5900 | 2450 | 1850 | 3200 | 5900 |
| Change in yield value (after water mixing/before water mixing) | | 1.6 | 5.8 | 1.5 | 1.2 | 1.5 | 7.9 |
| Change in B type viscometer viscosity (after water mixing/before water mixing) | | 1.2 | 3.2 | 1.2 | 0.9 | 1.2 | 2.5 |

| **Viscosity after 0.4% water mixing** | | | | | | | |
|---|---|---|---|---|---|---|---|
| | Yield value [Pa] | 5.5 | 46.4 | 3.6 | 8.6 | 6.0 | 48.3 |
| | B type viscometer viscosity [mPa·s] | 3150 | 16500 | 2800 | 2750 | 3900 | 18500 |
| Change in yield value (after water mixing/before water mixing) | | 2.4 | 21.1 | 1.6 | 5.1 | 1.9 | 19.3 |
| Change in B type viscometer viscosity (after water mixing/before water mixing) | | 1.4 | 8.9 | 1.3 | 1.4 | 1.2 | 7.7 |

| **Viscosity after 0.7% water mixing** | | | | | | | |
|---|---|---|---|---|---|---|---|
| | Yield value [Pa] | 11.6 | Unmeasurable | 10.8 | 3.8 | 17.1 | Unmeasurable |
| | B type viscometer viscosity [mPa·s] | 4500 | Unmeasurable | 3750 | 17750 | 6500 | 31500 |
| Change in yield value (after water mixing/before water mixing) | | 5.0 | - | 4.7 | 2.2 | 5.5 | - |
| Change in B type viscometer viscosity (after water mixing/before water mixing) | | 2 | - | 1.8 | 9.1 | 1.7 | 13.1 |

| **Evaluation of gloss: upper part: glossiness, lower part: visual confirmation** | | | | | | | |
|---|---|---|---|---|---|---|---|
| Amount of water mixed: 0% | | 23.2 ⊚: Particularly good | 4.6 ×: Poor | 20.5 ⊚: Particularly good | 11.1 ⊚: Particularly good | 37.9 ⊚: Particularly good | 7.8 ○: Good |
| Amount of water mixed: 0.2% | | 15.1 ⊚: Particularly good | 4.5 ×: Poor | 16.4 ⊚: Particularly good | 11.9 ⊚: Particularly good | 31.1 ⊚: Particularly good | 4.8 ×: Poor |
| Amount of water mixed: 0.4% | 14.9 ⊚: Particularly good | 4.4 ×: Poor | 14.7 ⊚: Particularly good | 6.9 Δ: Acceptable range | 19.7 ⊚: Particularly good | 4.0 ×: Poor | |
| Amount of water mixed: 0.7% | 11.2 ⊚: Particularly good | - | 11.5 ⊚: Particularly good | 4.8 ×: Poor | 8.7 ○: Good | - | |

### • Study 5

Using Example 14, 0.02 mass% of water was added every 10 minutes in the same manner as in "Verification 1 of fluidity at the time of water mixing" performed in the preliminary study, and the study on continuous mixing of a trace amount of water was performed. The results are shown in Table 12 together with the results of Comparative Example 1.

**[Table 12]**

| | | Example 14 | Comparative Example 1 |
|---|---|---|---|
| Post-production yield value [Pa] | | 2.2 | 1.9 |
| Post-production B type viscometer viscosity [mPa·s] | | 2200 | 2050 |

| **After 2 hours** | | | |
|---|---|---|---|
| | **Total amount of water mixed** | **0.24%** | **0.24%** |
| | Yield value [Pa] | 2.5 | 4.3 |
| | B type viscometer viscosity [mPa·s] | 2600 | 3800 |
| Change in yield value | | 1.1 | 2.4 |
| (after water mixing/before water mixing) | | | |
| Change in B type viscometer viscosity | | 1.2 | 1.9 |
| (after water mixing/before water mixing) | | | |

| **After 3 hours** | | | |
|---|---|---|---|
| | **Total amount of water mixed** | **0.36%** | **0.36%** |
| | Yield value [Pa] | 2.8 | 5.6 |
| | B type viscometer viscosity [mPa·s] | 2850 | 4550 |
| Change in yield value | | 1.3 | 2.9 |
| (after water mixing/before water mixing) | | | |
| Change in B type viscometer viscosity | | 1.3 | 2.2 |
| (after water mixing/before water mixing) | | | |

| **After 6 hours** | | | |
|---|---|---|---|
| | **Total amount of water mixed** | **0.72%** | **0.72%** |
| | Yield value [Pa] | 3.5 | 9.1 |
| | B type viscometer viscosity [mPa·s] | 3650 | 6800 |
| Change in yield value | | 1.6 | 4.8 |
| (after water mixing/before water mixing) | | | |
| Change in B type viscometer viscosity | | 1.7 | 3.3 |
| (after water mixing/before water mixing) | | | |

| **After 8 hours** | | | |
|---|---|---|---|
| | **Total amount of water mixed** | **0.96%** | **0.96%** |
| | Yield value [Pa] | 3.6 | 10.6 |
| | B type viscometer viscosity [mPa·s] | 3750 | 8150 |
| Change in yield value | | 1.6 | 5.6 |
| (after water mixing/before water mixing) | | | |
| Change in B type viscometer viscosity | | 1.7 | 4.0 |
| (after water mixing/before water mixing) | | | |

| **After 10 hours** | | | |
|---|---|---|---|
| | **Total amount of water mixed** | **1.20%** | **1.20%** |
| | Yield value [Pa] | 5.5 | 51.6 |
| | B type viscometer viscosity [mPa·s] | 4000 | 14500 |
| Change in yield value | | 2.5 | 27.2 |
| (after water mixing/before water mixing) | | | |
| Change in B type viscometer viscosity | | 1.8 | 7.0 |
| (after water mixing/before water mixing) | | | |

From the results of Table 12, it was suggested that in the case of Examples in which the fluidity could be maintained even when a predetermined amount of water was directly mixed, the fluidity could be maintained even when a trace amount of water was continuously mixed.

### Industrial Applicability

According to the present invention, it is possible to provide an oil-based food product for coating, which maintains fluidity even when water is mixed thereinto. By maintaining the fluidity, the amount of coating can be controlled, and an oil-based food product for coating with an appearance having a good gloss after coating can be provided.

## Claims

1. An oil-based food product for coating satisfying all of the following 1) to 3):
1) having an oil content of from 35 to 70 mass%;
2) containing a sucrose fatty acid ester with an HLB of from 3 to 17, the sucrose fatty acid ester containing, as a main constituent fatty acid, a saturated fatty acid having from 16 to 24 carbons; and
3) having a yield value of from 0.1 to 10 Pa in a molten state at 50°C,
provided that the main constituent fatty acid of the sucrose fatty acid ester refers to a fatty acid contained in an amount of 60 mass% or more in constituent fatty acids.

2. The oil-based food product for coating according to claim 1, which further satisfies 4):
4) having a content of a nonfat cocoa solid of 3 mass% or less and a content of a dairy product of from 2 to 30 mass%.

3. An oil-based food product for coating satisfying all of the following 1) to 5):
1) having an oil content of from 35 to 70 mass%;
2) containing a sucrose fatty acid ester with an HLB of from 3 to 17, the sucrose fatty acid ester containing, as a main constituent fatty acid, a saturated fatty acid having from 16 to 24 carbons;
3) having a yield value of from 0.1 to 10 Pa in a molten state at 50°C;
4) having a content of a nonfat cocoa solid of 3 mass% or less and a content of a dairy product of from 5 to 20 mass%; and
5) having a content of cocoa butter of 5 mass% or less in the oil-based food product,
provided that the main constituent fatty acid of the sucrose fatty acid ester refers to a fatty acid contained in an amount of 60 mass% or more in constituent fatty acids.

4. The oil-based food product for coating according to any one of claims 1 to 3, wherein a total content of a saturated fatty acid having 12 carbons and a saturated fatty acid having 14 carbons in all the constituent fatty acids in an oil component is from 15 to 50 mass%.

5. The oil-based food product for coating according to any one of claims 1 to 3, wherein, when 0.4 mass% of water is mixed, at 50°C,
a ratio of a yield value after water mixing to a yield value before water mixing is from 0.5 to 5, and
a ratio of a B type viscometer viscosity after water mixing to a B type viscometer viscosity before water mixing is from 0.5 to 5.

6. The oil-based food product for coating according to claim 1 or 2, wherein a content of cocoa butter in the oil-based food product is 5 mass% or less.

7. The oil-based food product for coating according to any one of claims 1 to 3, wherein a food product to be coated is a water-containing food product and has a water activity of 0.75 or more.

8. A composite food product in which a water-containing food product is coated with the oil-based food product for coating according to any one of claims 1 to 3.

9. A method for producing an oil-based food product for coating satisfying all of the following requirements 1) to 3), the method comprising blending a sucrose fatty acid ester of 2) before refinement, and performing mixing and refining treatment:
1) having an oil content of from 35 to 70 mass%;
2) containing a sucrose fatty acid ester with an HLB of from 3 to 17, the sucrose fatty acid ester containing, as a main constituent fatty acid, a saturated fatty acid having from 16 to 24 carbons; and
3) having a yield value of from 0.1 to 10 Pa at 50°C after production,
provided that the main constituent fatty acid of the sucrose fatty acid ester refers to a fatty acid contained in an amount of 60 mass% or more in constituent fatty acids.

10. A method for producing a composite food product, the method comprising coating a water-containing food product with an oil-based food product for coating obtained by the production method according to claim 9.

11. A method for improving gloss of a composite food product, the method comprising coating a surface of the composite food product with an oil-based food product for coating,
the oil-based food product:
having an oil content of from 35 to 70 mass%;
containing a sucrose fatty acid ester with an HLB of from 3 to 17, the sucrose fatty acid ester containing, as a main constituent fatty acid, a saturated fatty acid having from 16 to 24 carbons, and
having a yield value of from 0.1 to 10 Pa in a molten state at 50°C.

12. A method for maintaining fluidity of an oil-based food product for coating so that the oil-based food product for coating satisfies the following requirements A) and B) by using an oil-based food product for coating obtained by the production method according to claim 9:
when 0.4 mass% of water is mixed, at 50°C,
A) a ratio of a yield value after water mixing to a yield value before water mixing is from 0.5 to 5, and
B) a ratio of a B type viscometer viscosity after water mixing to a B type viscometer viscosity before water mixing is from 0.5 to 5.
